# EUROPEAN PATENT SPECIFICATION

(11) **EP 2 592 795 B1**
(45) Date of publication and mention of the grant of the patent: **12.02.2014**
(21) Application number: 11189060.4
(22) Date of filing: 14.11.2011
(51) Int. Cl.: H04L 12/58

(54) **System and method for displaying message history when composing a message**
System und Verfahren zur Anzeige des Nachrichtenverlaufs beim Erstellen einer Nachricht
Système et procédé pour afficher l'historique des messages au moment de composer un message

(43) Date of publication of application: 15.05.2013
(73) Proprietor: BlackBerry Limited, Waterloo, ON N2K 0A7 (CA)
(72) Inventor: Vymenets, Leonid, North York, Ontario M2R 3V8 (CA); Riddle, Francis Thomas, Andover, MA 01810 (US); Chen, Henry Yao-Tsu, Waterloo, Ontario N2L 3W8 (CA)
(74) Representative: Moore, Barry

(56) References cited:
- EP-A1- 2 381 402
- US-A1- 2004 137 884
- US-A1- 2010 223 547

## Description

### TECHNICAL FIELD

The following relates to systems and methods for displaying message history when composing a message.

### BACKGROUND

Messaging has become a popular way of electronically communicating in a conversational style, in particular using a mobile or handheld device. A user can send messages to a recipient and receive messages from the recipient and can also send and receive messages among a group of recipients, or participants. Messages may be composed and read in a graphical user interface (GUI), which allows a user to specify the recipient or recipients. Non-limiting examples of messaging technology include text messaging and instant messaging (IM). Text messaging includes, for example, short messaging service (SMS) messaging and multimedia messaging service (MMS) messaging.

Messaging conversations often have a history of messages exchanged between the conversation participants, and several conversations may exist with the same recipient. For example, a user may begin a new conversation with a recipient rather than continue a previous conversation. Furthermore, if a recipient is a member of multiple groups, the recipient may be involved in multiple ongoing conversations at the same time. Organizing such conversations can therefore become challenging.

EP 2,381,402 relates to methods and apparatus for use in communicating messages from a communication device. The device receives, via its user interface, an input request for creating a new message. The device also receives, via its user interface, one or more input requests for selecting one or more message recipient identifiers for the new message. In response to receiving the one or more input requests, the device identifies whether a stored conversation thread is associated with conversation participant identifiers that match the conversation participant identifiers for the new message. If so, the device displays the identified conversation thread together with a message body input field of the new message, prior to entry of message body contents in the message body input field. The device then receives, via the user interface, the message body contents in the message body input field, and causes the new message to be transmitted to one or more communication devices identified by the one or more message recipient identifiers.

### GENERAL

The present teaching is directed to a method of operating a mobile device as detailed in claim 1. Furthermore, the present teaching is directed to a computer program as detailed in claim 12. Additionally, the present teaching is directed to a mobile device as detailed in claim 13. Advantageous embodiments are provided in the dependent claims.

In general, a method of operating a mobile device is provided. The method comprises the following steps:
displaying a message composition application comprising a first recipient field, a message history display area, and a message composition field;
receiving text in the first recipient field;
displaying a list of candidate recipients corresponding to the text in the first recipient field;
detecting that a cursor has been positioned over a given candidate recipient in the list; and
displaying a message history associated with the given candidate recipient in the message history display area.

In general, a computer program is provided. The computer program comprises computer executable instructions for displaying message history while composing a message, the computer executable instructions being embodied on a computer readable medium and being adapted to perform the following steps when said program is run on a computer:
displaying a message composition application comprising a first recipient field, a message history display area, and a message composition field;
receiving text in the first recipient field;
displaying a list of candidate recipients corresponding to the text in the first recipient field;
detecting that a cursor has been positioned over a given candidate recipient in the list; and
displaying a message history associated with the given candidate recipient in the message history display area.

In general, a mobile device is provided. The mobile device comprises a processor, a display, and memory the memory comprising computer executable instructions for displaying message history on the display while composing a message, the computer executable instructions being adapted to perform the following steps:
displaying a message composition application comprising a first recipient field, a message history display area, and a message composition field;
receiving text in the first recipient field;
displaying a list of candidate recipients corresponding to the text in the first recipient field;
detecting that a cursor has been positioned over a given candidate recipient in the list; and
displaying a message history associated with the given candidate recipient in the message history display area. BRIEF DESCRIPTION OF THE DRAWINGS

Examples will now be described only with reference to the appended drawings wherein:
Figure 1 is a schematic diagram illustrating an example system in which a mobile device is able to exchange messages over a wireless network with other mobile devices;
Figures 2a, 2b, 2c and 2d are example GUIs for composing a message, such that the GUI shows a message history upon detecting that a cursor has been moved away from a recipient field;
Figure 3 is a flow diagram illustrating example computer executable instructions for showing the message history upon detecting that a cursor has been moved away from a recipient field;
Figure 4 is a schematic diagram illustrating an example system in which data items are pushed from a host system to a mobile device;
Figure 5 is a block diagram of an example mobile device;
Figure 6 is a block diagram illustrating example ones of the other software applications and components shown in Figure 5;
Figures 7a, 7b, and 7c are example GUIs for composing a message, such that the GUI shows that a message can be composed, a recipient can be specified, and the composed message can be modified;
Figure 8 is a flow diagram illustrating example computer executable instructions for composing a message, specifying a recipient, and then modifying the composed message;
Figures 9a, 9b, and 9c are example GUIs for composing a message, such that the GUI shows that a recipient can be specified, a message can be composed, and the specified recipient can be modified;
Figure 10 is a flow diagram illustrating example computer executable instructions for specifying a recipient, composing a message, and modifying the specified recipient;
Figures 11a, 11b, 11c, and 11d are example GUIs for composing a message, such that the GUI shows that, as a cursor moves over a recipient, a message history for the recipient can be dynamically displayed;
Figure 12 is a flow diagram illustrating example computer executable instructions for dynamically displaying message history for a recipient, when a cursor moves over the recipient's name;
Figures 13a and 13b are example GUIs for composing a message, such that the GUI shows that older and newer messages can be shown by selecting a link;
Figure 14 is a flow diagram illustrating example computer executable instructions for showing different portions of message history by selecting a link;
Figures 15a and 15b are example GUIs for composing a message, such that the GUI shows message history from different recipients can be displayed together;
Figure 16 is a flow diagram illustrating example computer executable instructions for displaying unified message history from different recipients in a message history display area;
Figures 17a and 17b are example GUIs for composing a message, such that the GUI shows message history involving one set of recipients differs from message history involving a different set of recipients; and
Figure 18 is a flow diagram illustrating example computer executable instructions for showing the message history of one set of recipients and, upon modifying the recipients to a different set of recipients, showing a different message history.

### DETAILED DESCRIPTION OF THE DRAWINGS

In messaging applications, such as text messaging and instant messaging, a user typically composes a message and sends the message to a recipient. The messages that are exchanged between a user and a recipient are also typically recorded or saved. These messages may hereinafter be commonly referred to as a "message history".

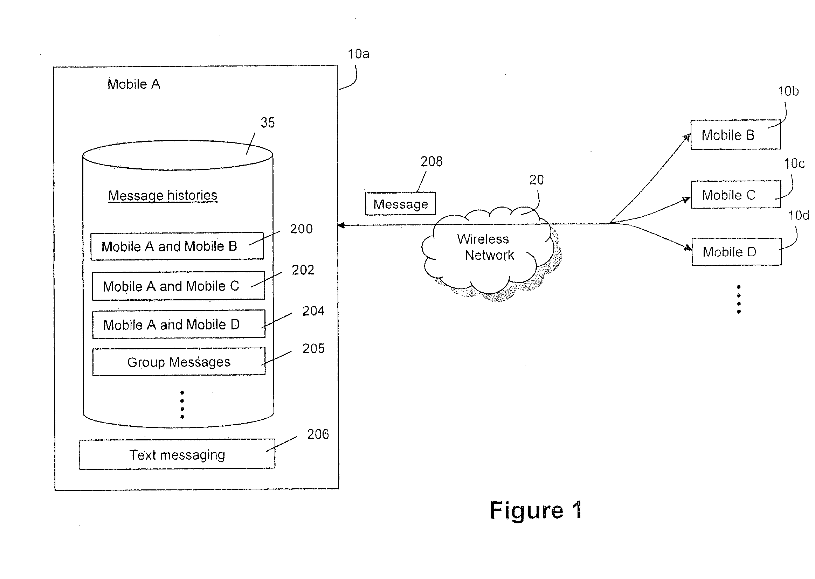

Turning to Figure 1, mobile device 10a is in communication with other mobile devices 10b, 10c and 10d through a wireless network 20. Mobile device 10a, 10b, 10c and 10d are able to send and receive messages with each other, such as message 208. In one example, mobile device 10a can use a text messaging application 206 to exchange messages with the other mobile devices 10b, 10c and 10d. Other messaging applications are also applicable to the principles described herein. Messages are input, read, sent and received using a messaging application, as is well known.

It can be appreciated that the mobile device is herein generally referenced with the numeral "10" and that the suffixes "a", "b", "c", and "d" are used only to distinguish between different mobile devices 10 in the examples described.

Mobile device 10a has access to, or has stored thereon, or both, a message history 35. Message history 35 includes messages that have already been exchanged in a message composition application such as SMS, IM, MMS, etc. In one example, message history 35 stores message histories organized according to the sender(s) and receiver(s) involved in the associated messaging conversation. For example, messages exchanged solely between mobile device 10a and mobile device 10b are saved together in storage 200. Similarly, messages exchanged solely between mobile device 10a and mobile device 10c, and messages exchanged solely between mobile device 10a and mobile device 10d, are saved respectively in storages 202 and 204. Messages exchanged among a group of participants that comprises mobile device 10a and any plurality of other mobile devices 10, e.g., mobile device 10b, mobile device 10c, and mobile device 10d, are stored in group storage 205.

A user of mobile device 10a interacts with components of mobile device 10a to participate in a messaging conversation. For example, the user provides input to mobile device 10a using input mechanisms, such as a keyboard and a touch-sensitive screen, in order to compose a new message or to read a received message. Mobile device 10a presents information to the user using output devices, such as a display and a speaker. Using input mechanisms and output mechanisms of mobile device 10a, the user performs messaging functionality as described below, as is well known in the art.

It is recognized that displaying message history at certain times, such as when composing or drafting a message which has not yet been sent, provides beneficial information to the user. For example, when composing a message to a recipient, it is beneficial to know what messages have been previously exchanged between the user and the recipient. This, for example, provides the user with the context of the conversation and allows the user to prepare a message that is appropriate within the context.

It is also recognized that selecting the correct recipient may be difficult based on limited information. For example, although a recipient can be identified by name, or a picture, or both, a user may still not fully recognize the recipient. It is also recognized that the message history between the user and the recipient can help confirm and clarify the identity of the recipient. The user can also use the message history to help identify the subjective relationship (e.g. friendly, curt, informal, formal, etc.) between the user and the recipient.

As the present systems and methods described herein show the message history, for example, upon specifying a recipient, the user can determine whether or not the specified recipient is correct. If the specified recipient is not correct, as determined from the message history, the user can specify another recipient.

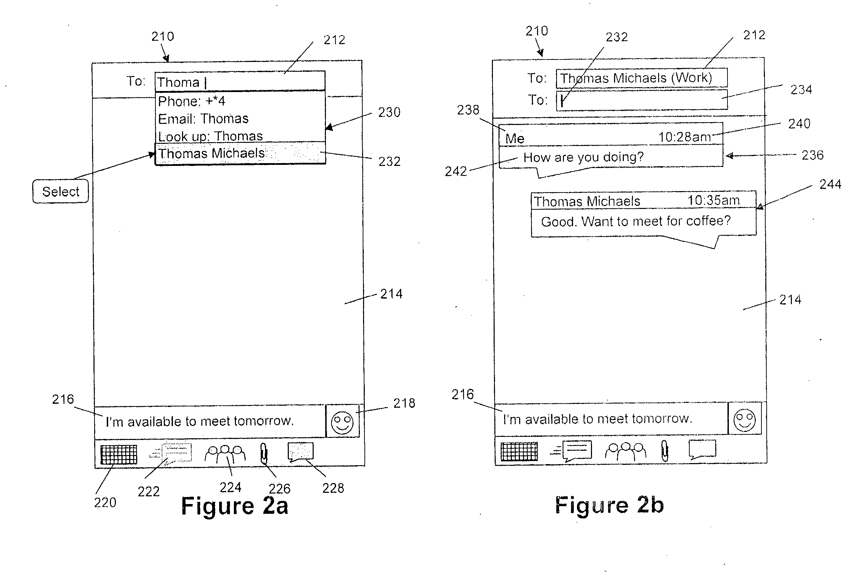

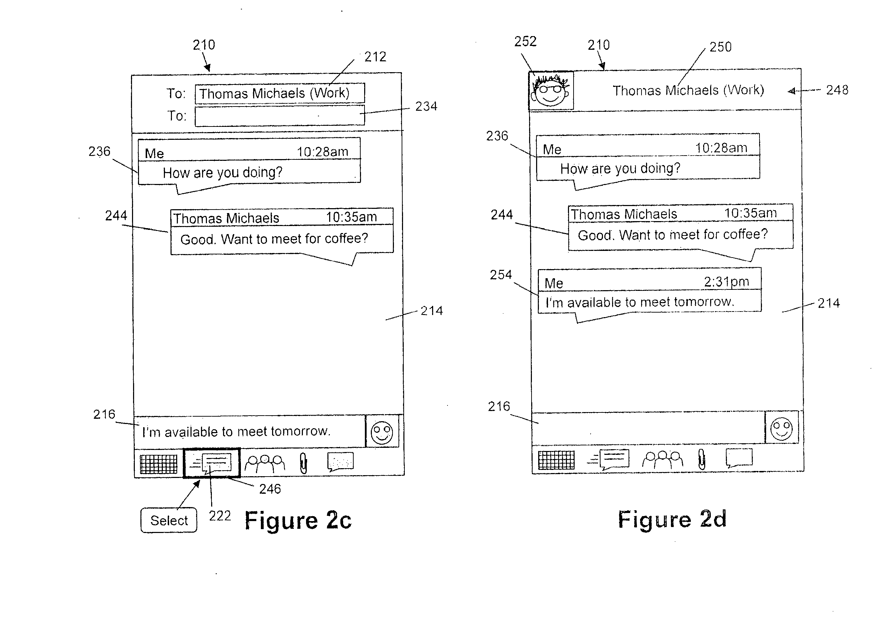

Turning to Figures 2a, 2b, 2c and 2d, example GUIs are provided showing different stages to invoke the display of message history.

Referring to Figure 2a, GUI 210 for composing a message is shown. In one example, GUI 210 is displayed on a display of mobile device 10a. GUI 210 includes recipient field 212, message history display area 214, and message composition field 216. Recipient field 212 enables a user to select and specify one or more recipients. For example, a user can enter the name of a contact in recipient field 212 using a keyboard of mobile device 10a. Message history display area 214 displays message history information, such as, for example, a message history from message histories 35 of Figure 1. Message composition field 216 enables a user to input text to compose or draft a message. For example, message composition field 216 in Figure 2a includes the message: "I'm available to meet tomorrow." In the example of Figure 2a, the message has not yet been sent and is sent when send button 222 is selected or actuated by the user.

GUI 210 also enables user to add icons to a message, such as emoticons, by selecting emoticon button 218. GUI 210 also includes keyboard button 220, recipients button 224, attachments button 226, and next unopened item button 228. Upon detecting an actuation of keyboard button 220, a touch screen keyboard is shown on a display of mobile device 10a display. Upon detecting an actuation of recipients button 224, the selected recipients are shown. Further information about the recipients can also be shown. Upon detecting an actuation of attachments button 226, functionality is presentation that enables a user to add or attach a file to the message. Upon detecting an actuation of next unopened item button 228, the next unopened message is displayed.

Continuing with Figure 2a, in recipient field 212, text has been input by a user which causes drop down list 230 to be displayed. Drop down list 230 includes various entries, including a recipient name corresponding to the text that has been input into recipient field 212. For example, the input text recites "Thoma", and a possible match of a recipient name is "Thomas Michaels", since it includes the same letters of "Thoma". Cursor 232, illustrated as a highlighted box, is positioned over the recipient name "Thomas Michaels".

Upon detecting a selection of cursor 32, indicating the selection by a user of recipient name "Thomas Michaels", GUI 210 of Figure 2b is displayed. As shown in Figure 2b, subsequent to user selection of the name "Thomas Michaels" the name "Thomas Michaels (Work)" is displayed in recipient field 212. As shown in Figure 2b, the recipient name includes the "(Work)" identification to show that a message will be sent to Thomas Michaels' work phone number. Upon the selection of "Thomas Michaels" and the display of "Thomas Michaels (Work)" in recipient field 212, a second (or additional) recipient field 234 is displayed and navigation focus moves, e.g., cursor 232 is moved to the second recipient field 234 as shown in Figure 2b. Furthermore, upon the selection of "Thomas Michaels" and the display of "Thomas Michaels (Work)" in recipient field 212, a message history associated with Thomas Michaels is retrieved or otherwise read from messages histories 35 (of Figure 1) and is displayed in message history display area 214. The retrieved message history includes message 236 from the user, identified as "Me", and message 244 from Thomas Michaels. In one example, message 236 is displayed as time 240 that indicates the time at which message 236 was sent, identifier 238 of who sent the message, as well as content (or text) 242 of message 236.

As shown in GUI 210 of Figure 2b, the user may still add or select further recipients through further interaction with second recipient field 234. The message history associated with the currently specified recipient (i.e., the recipient specified in recipient field 212) is also displayed. While cursor 232 is located in recipient field 212 or in second recipient field 234, the associated message history continues to be displayed allowing the user to determine, for example, if the specified recipient in recipient field 212 is correct, based on the message history. If the recipient is not correct, the user can move cursor 232 back to recipient field 212 to modify the specified recipient. For example, a single navigational input may be used to move cursor 232 from second recipient field 234 to recipient field 212.

The user can use the message history to confirm that he or she has selected the correct or desired recipient for messaging. In the example shown in Figure 2b, Thomas Michaels is the correct recipient and the user has proceeded to input a draft a message comprising the text "I'm available to meet tomorrow".

In one example, when actuations are detected to move cursor 232 from the second recipient field 234 to message composition field 216, recipient field 212 and recipient field 234 continue to be displayed. In such an example, the user is able to change recipients while drafting a message through navigation between message composition field 216 and recipient field 212 or second recipient field 234.

Referring to Figure 2c, cursor 246 is positioned over send button 222. Upon detecting a selection of send button 222, the message input in message composition field 216 is sent to the specified recipient or recipients.

GUI 210 of Figure 2d displays an updated message history display area 254 that includes sent message 254.

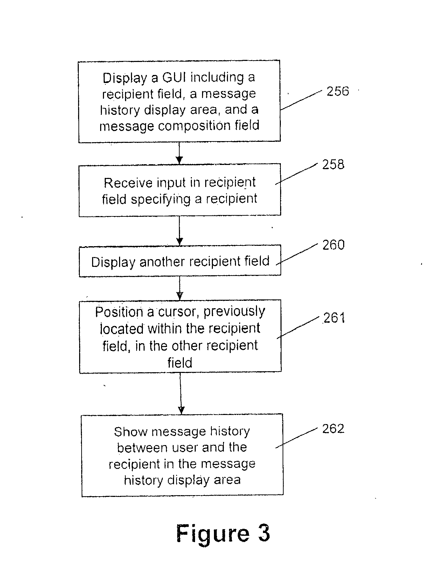

Turning to Figure 3, example computer executable instructions are provided for showing message history in GUI 210 (of Figures 2a, 2b, 2c and 2d, for example) while composing a message. At block 256, GUI 201 is displayed and includes a recipient field, a message history display area, a cursor and a message composition field. At block 258 an input is received in the recipient field specifying a recipient. At block 260, upon detecting that the recipient has been specified, t a second recipient field is displayed. At block 261, the cursor, which was previously located within the recipient field, is repositioned or moved to the second recipient field. At block 262 the message history associated with the recipient is retrieved from a message history store and displayed in the message history display area.

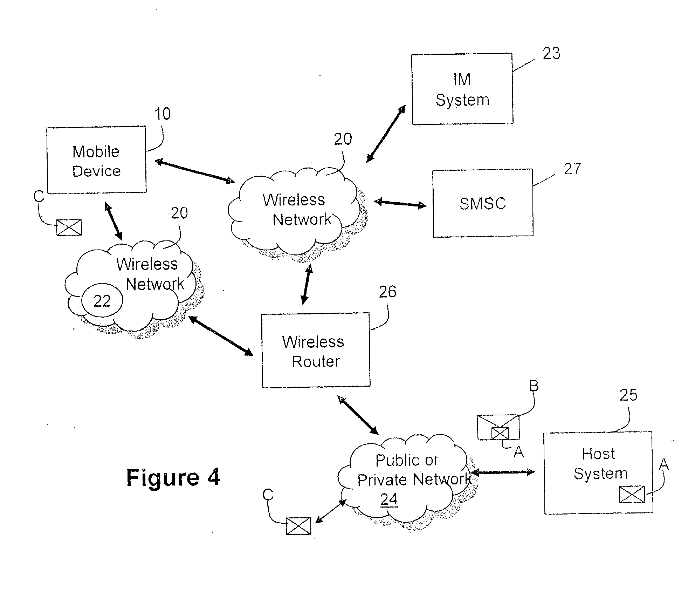

As shown in Figure 4, in one example, mobile device 10 is a two-way communication device with advanced data communication capabilities including the capability to communicate with other mobile devices 10 or computer systems through a network of transceiver stations. Mobile device 10 may also have the capability to allow voice communication. Depending on the functionality provided by mobile device 10, it may be referred to as a data messaging device, a two-way pager, a cellular telephone with data messaging capabilities, a wireless Internet appliance, a tablet, a laptop, a net book, or a data communication device (with or without telephony capabilities). Mobile device 10 can also be one that is used in a system that is configured for continuously routing all forms of pushed information from host system 25 to mobile device 10. Mobile device 10 can also be used for SMS messaging via an SMS messaging centre (SMSC) 25. Mobile device 10 can also be used for instant messaging (IMing) via an IM system 23.

Figure 4 is an example system diagram showing the redirection of user data items (such as message A or C) from a corporate enterprise computer system host system 25 to mobile device 10 via wireless router 26. Wireless router 26 provides wireless connectivity functionality that abstracts complexities of wireless network 20, and implements features necessary to support pushing data to mobile device 10. Although not shown, a plurality of mobile devices may access data from host system 25. In this example, message A represents an internal message sent from, e.g. a desktop computer (not shown) within host system 25, to any number of server computers in the corporate network (e.g. LAN), which may, in general, include a database server, a calendar server, an E-mail server or a voice-mail server. It can be appreciated that SMS messaging and/or IMing can also be provided via the wireless router 26.

Message C 4 represents an external message from a sender that is not directly connected to host system 25, such as mobile device 10, some other mobile device (not shown), or any device connected to the public or private network 24 (e.g. the Internet). Message C may be e-mail, voice-mail, calendar information, database updates, web-page updates or a command message from mobile device 10 to host system 25. Host system 25 may comprise, communication links, hardware and software associated with a corporate enterprise computer network system, one or more wireless mobility agents, a TCP/IP connection, a collection of data stores, (for example a data store for e-mail could be an off-the-shelf mail server like Microsoft Exchange® Server or Lotus Notes® Server), and in some examples, is contained within and behind a corporate firewall.

As an illustrative example of the operation for wireless router 26 shown in Figure 4, consider a data item A, repackaged in outer envelope B (the packaged data item A now referred to as "data item (A)") and sent to mobile device 10. Although the above describes host system 25 as being used within a corporate enterprise network environment, this is just one example of one type of host service that offers push-based messages for a handheld wireless device that is capable of notifying and presenting the data to the user in real-time at the mobile device when data arrives at the host system 25.

Wireless router 26 provides a range of services to make creating a push-based host service possible. These networks may comprise: (1) the Code Division Multiple Access (CDMA) network, (2) the Groupe Special Mobile or the Global System for Mobile Communications (GSM) and the General Packet Radio Service (GPRS), and (3) the existing and upcoming third-generation (3G) and fourth generation (4G) networks like EDGE, UMTS and HSDPA, LTE, Wi-Max etc. Some older examples of data-centric networks include, but are not limited to: (1) the Mobitex Radio Network ("Mobitex") and (2) the DataTAC Radio Network ("DataTAC").

To be effective in providing push services for host systems 25, wireless router 26 may implement a set of defined functions. It can be appreciated that one could select many different hardware configurations for wireless router 26, however, many of the same or similar set of features would likely be present in the different configurations.

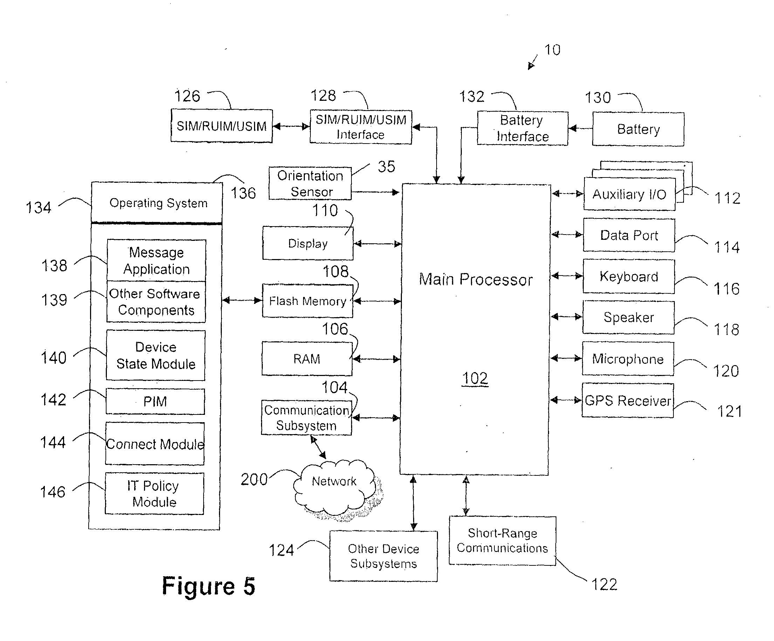

An example configuration of mobile device 10 is illustrated in Figures 5-6. Referring first to Figure 5, shown therein is a block diagram of an example of a mobile device 10. Mobile device 10 comprises main processor 102 that controls the overall operation of mobile device 10. Communication functions, including data and voice communications, are performed through a communication subsystem 104. Communication subsystem 104 receives messages from and sends messages to network 200. In this example of mobile device 10, communication subsystem 104 is configured in accordance with, for example GSM, CDMA, UMTS, LTE, GPRS, WIFI standards, which are used worldwide. Other communication configurations that are equally applicable are 3G and 4G networks, and the like. New standards are still being defined, but it is believed that they will have similarities to the network behaviour described herein, and it will also be understood by persons skilled in the art that the embodiments described herein are intended to use any other suitable standards that are developed in the future. The wireless link connecting communication subsystem 104 with network 200 represents one or more different Radio Frequency (RF) channels, operating according to defined protocols.

Main processor 102 also interacts with additional subsystems such as a Random Access Memory (RAM) 106, a flash memory 108, a display 110, an auxiliary input/output (I/O) subsystem 112, a data port 114, a keyboard 116, a speaker 118, a microphone 120, a GPS receiver 121, short-range communications subsystem 122, and other device subsystems 124. As will be discussed below, short-range communications subsystem 122 can implement any suitable or desirable device-to-device or peer-to-peer communications protocol capable of communicating at a relatively short range, e.g. directly from one device to another. Examples include Bluetooth®, ad-hoc WiFi, infrared, or any "long-range" protocol re-configured to utilize available short-range components. It will therefore be appreciated short-range communications subsystem 122 may represent any hardware, software or combination of both that enable a communication protocol to be implemented between devices or entities in a short range scenario, such protocol being standard or proprietary.

Some of the subsystems of mobile device 10 perform communication-related functions, whereas other subsystems may provide "resident" or on-device functions. By way of example, display 110 and keyboard 116 may be used for both communication-related functions, such as entering a text message for transmission over network 200, and device-resident functions such as a calculator or task list.

Mobile device 10 can send and receive communication signals over network 200 after required network registration or activation procedures have been completed. Network access is associated with a subscriber or user of mobile device 10. To identify a subscriber, mobile device 10 may use a subscriber module component or "smart card" 126, such as a Subscriber Identity Module (SIM), a Removable User Identity Module (RUIM) and a Universal Subscriber Identity Module (USIM). In the example shown, a SIM/RUIM/USIM 126 is to be inserted into a SIM/RUIM/USIM interface 128 in order to communicate with a network. Without the component 126, mobile device 10 is not fully operational for communication with the network 200. Once SIM/RUIM/USIM 126 is inserted into SIM/RUIM/USIM interface 128, it is coupled to the main processor 102.

Mobile device 10 is typically a battery-powered device and in this example includes a battery interface 132 for receiving one or more rechargeable batteries 130. In at least some embodiments, battery 130 can be a smart battery with an embedded microprocessor. Battery interface 132 is coupled to a regulator (not shown), which assists battery 130 in providing power V+ to mobile device 10. Although current technology makes use of a battery, future technologies such as micro fuel cells may provide the power to mobile device 10.

Mobile device 10 also includes an operating system 134 and software components 136 to 146 which are described in more detail below. Operating system 134 and software components 136 to 146 that are executed by main processor 102 are typically stored in a persistent store such as flash memory 108, which may alternatively be a read-only memory (ROM) or similar storage element (not shown). Those skilled in the art will appreciate that portions of operating system 134 and software components 136 to 146, such as specific device applications, or parts thereof, may be temporarily loaded into a volatile store such as the RAM 106. Other software components can also be included, as is well known to those skilled in the art.

The subset of software applications 136 that control basic device operations, including data and voice communication applications, may be installed on mobile device 10 during its manufacture. Software applications may include a message application 138, a device state module 140, a Personal Information Manager (PIM) 142, a connect module 144 and an IT policy module 146. A message application 138 can be any suitable software program that allows a user of mobile device 10 to send and receive electronic messages, wherein messages are typically stored in flash memory 108 of mobile device 10. A device state module 140 provides persistence, i.e. device state module 140 ensures that important device data is stored in persistent memory, such as flash memory 108, so that the data is not lost when mobile device 10 is turned off or loses power. A PIM 142 includes functionality for organizing and managing data items of interest to the user, such as, but not limited to, e-mail, text messages, instant messages, contacts, calendar events, and voice mails, and may interact with network 200. A connect module 144 implements the communication protocols that are required for mobile device 10 to communicate with the wireless infrastructure and any host system 25, such as an enterprise system, that mobile device 10 is authorized to interface with. An IT policy module 146 receives IT policy data that encodes the IT policy, and may be responsible for organizing and securing rules such as the "Set Maximum Password Attempts" IT policy.

Other types of software applications or components 139 can also be installed on mobile device 10. These software applications 139 can be pre-installed applications (i.e. other than message application 138) or third party applications, which are added after the manufacture of mobile device 10. Examples of third party applications include games, calculators, utilities, etc. Additional applications 139 can be loaded onto mobile device 10 through at least one of wireless network 20, auxiliary I/O subsystem 112, data port 114, short-range communications subsystem 122, or any other suitable device subsystem 124.

Data port 114 can be any suitable port that enables data communication between mobile device 10 and another computing device. Data port 114 can be a serial or a parallel port. In some instances, data port 114 can be a USB port that includes data lines for data transfer and a supply line that can provide a charging current to charge battery 130 of mobile device 10.

For voice communications, received signals are output to speaker 118, and signals for transmission are generated by microphone 120. Although voice or audio signal output is accomplished primarily through speaker 118, display 110 can also be used to provide additional information such as the identity of a calling party, duration of a voice call, or other voice call related information.

For composing data items, such as e-mail messages and text messages, for example, a user or subscriber could use a touch-sensitive overlay (not shown) on display 110 that is part of a touch screen display (not shown), in addition to possibly auxiliary I/O subsystem 112. Auxiliary I/O subsystem 112 may include devices such as: a mouse, track ball, infrared fingerprint detector, or a roller wheel with dynamic button pressing capability. A composed item may be transmitted over wireless network 20 through communication subsystem 104.

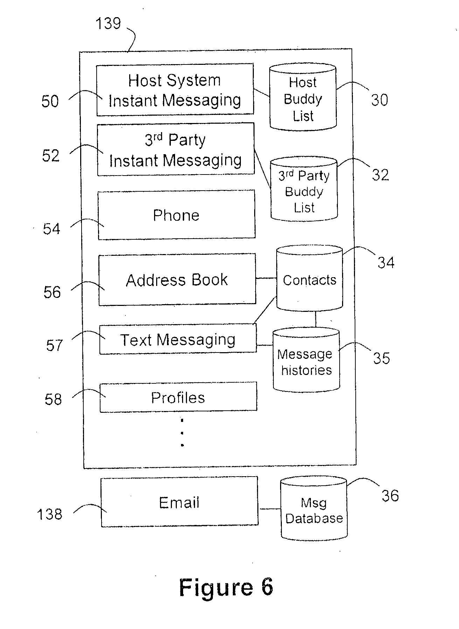

Figure 6 shows an example of the other software applications and components 139 of Figure 5 that may be stored on and used with mobile device 10. Only examples are shown in Figure 6 and such examples are not to be considered exhaustive. In this example, a host instant message application 50, 3^{rd} party instant messaging application 52, phone application 54, address book 56 and a profiles application 58 are shown to illustrate the various features that may be provided by mobile device 10. Also shown in Figure 6 is message application 138, which in the following will be referred to as an email application 138 for clarity and stores or otherwise has access to a message database 36 for storing incoming and outgoing messages as well as those stored in various folders. It will be appreciated that the various applications may operate independently or may utilize features of other applications. For example, phone application 54 and email application 138 may use address book 56 for contact details obtained from a list of contacts 34.

Another example of a messaging application is a text messaging application 57 which is used for sending messages over phone or cellular networks. These messages include, for example, SMS and MMS messages. The message histories from the text messages are storied in database 35. Like other messaging applications, text messaging application 57 and message histories 35 can interact with other applications, such as contacts database 34 of address book 56.

The host system instant messaging application 50 is an instant messaging service that is hosted and provided by host system 25. The host system instant messaging application 50 includes or otherwise has access to a host buddy list 30 for storing contact information for buddies also using host system instant messaging application 50. 3^{rd} part instant messaging application 52 includes or otherwise has access to a 3^{rd} party buddy list 32 for storing contact information for buddies also using 3^{rd} party instant messaging application 52. It will be appreciated that any number of host system or 3^{rd} party instant messaging services can be installed and run on mobile device 10 and thus the two shown in Figure 6 are for illustrative purposes only. Also, it will be appreciated that in other embodiments, only a single instant messaging service may be supported or a unified instant messaging service that combines contact or buddy lists for multiple instant messaging services and utilizes a common user interface (not shown).

In some example embodiments, each message generally comprises a body, which contains the content for the message (e.g. text), and a header, which contains various fields used for transmitting and processing each message. For example, the header includes a message type field to specify the type of transmission (e.g. PIN, SMS, MMS, email, etc.), a source field to specify the device address for the sender, a destination field to specify the device address for the intended recipient, a conversation ID field to identify which conversation thread the message corresponds to (e.g. such that each message is identified by the conversation in which it was sent), and a timestamp field to indicate the time (and if desired, the date) at which the message was sent by the designated sender.

It will be appreciated that any module or component exemplified herein that executes instructions or operations may include or otherwise have access to computer readable media such as storage media, computer storage media, or data storage devices (removable and/or non-removable) such as, for example, magnetic disks, optical disks, or tape. Computer storage media may include volatile and non-volatile, removable and non-removable media implemented in any method or technology for storage of information, such as computer readable instructions, data structures, program modules, or other data, except transitory propagating signals per se. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of mobile device 10, or accessible or connectable thereto. Any application or module herein described may be implemented using computer readable/executable instructions or operations that may be stored or otherwise held by such computer readable media.

Details regarding examples for displaying message history when composing a message will now be discussed.

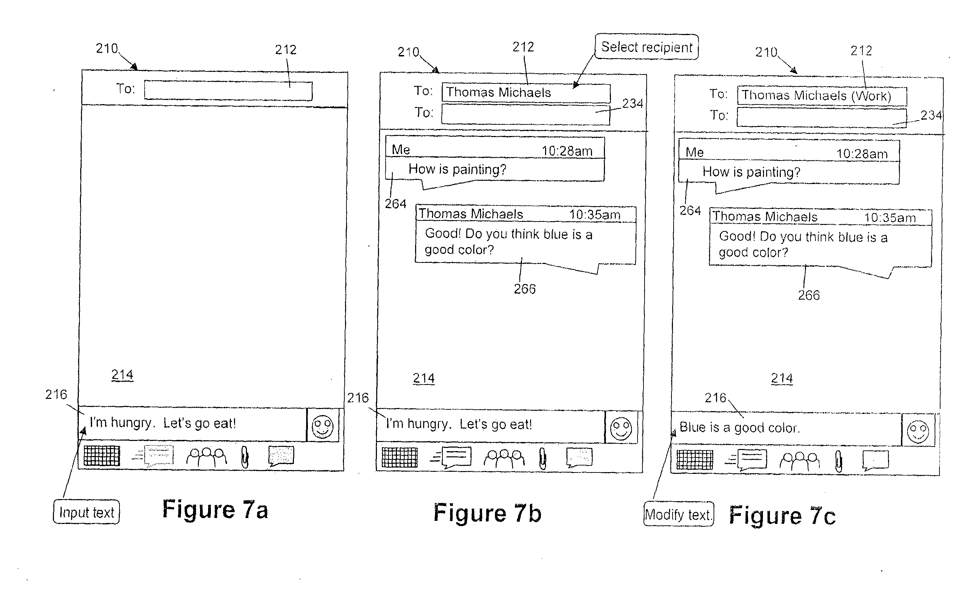

Turning to Figures 7a, 7b and 7c, example mobile device GUIs show flexible ordering of adding a recipient and composing a message. In one example, a user begins to compose a message, specifies a recipient, and then returns to composing the message. Accordingly, text input in a message composition field may be received before input in a recipient field for specifying the recipient.

Referring first to Figure 7a, mobile device 10 detects the input of the text "I'm hungry. Let's go eat!" into message composition field 216.

In Figure 7b, mobile device 10 detects the input of the recipient "Thomas Michaels", into recipient field 212. Subsequently, and upon detecting input to move the cursor from recipient field 212, message history (comprising messages 264 and 266) associated with the recipient is shown in message history display area 214. In the example shown, the draft message in message composition field 216 does not match the context of the message history (e.g., messages 264 and 266). On seeing the message history for the specified recipient, the user is able to change the recipient, for example, if the user inadvertently selected the incorrect recipient for the message. Alternatively, if the user has selected the correct recipient, the user is able to see that the draft message does not fit the context of the conversation and may modify the text accordingly.

Referring to Figure 7c, the user decides, in this example, that the selected recipient is correct and, thus, modifies the draft text in message composition field 216, in order for the message to better match the context of the conversation. In some examples, while drafting the message in message composition field 216, recipient fields 212 and 234 continue to be displayed to permit viewing and editing, if desired, the recipients.

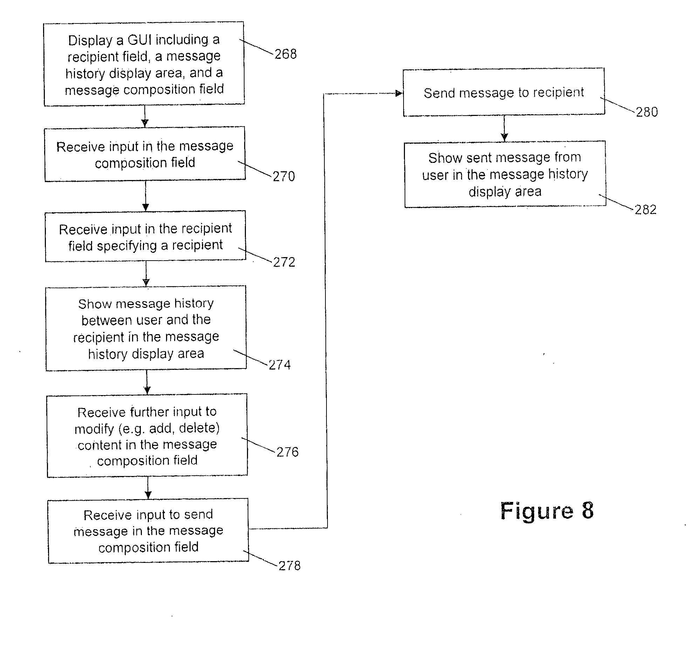

Turning to Figure 8, example computer executable instructions are provided, with reference to corresponding elements of Figures 7a, 7b and 7c. At block 268, mobile device 10 displays GUI 210 including recipient field 212, message history display area 214, and message composition field 216. At block 270, an input is received for message composition field 216 to add or modify message content. At block 272, an input is received for recipient field 212 specifying a recipient. At block 274, the message history associated with the recipient is retrieved and displayed in message history display area 214. At block 275, mobile device 10 receives further input to modify (e.g. add, delete) content in message composition field 216. At block 278, an input is received to send the text of the message specified in message composition field 216, by, for example, an actuation of a send button. At block 280, the message is sent to the recipient. At block 282, the sent message is displayed in message history display area 214.

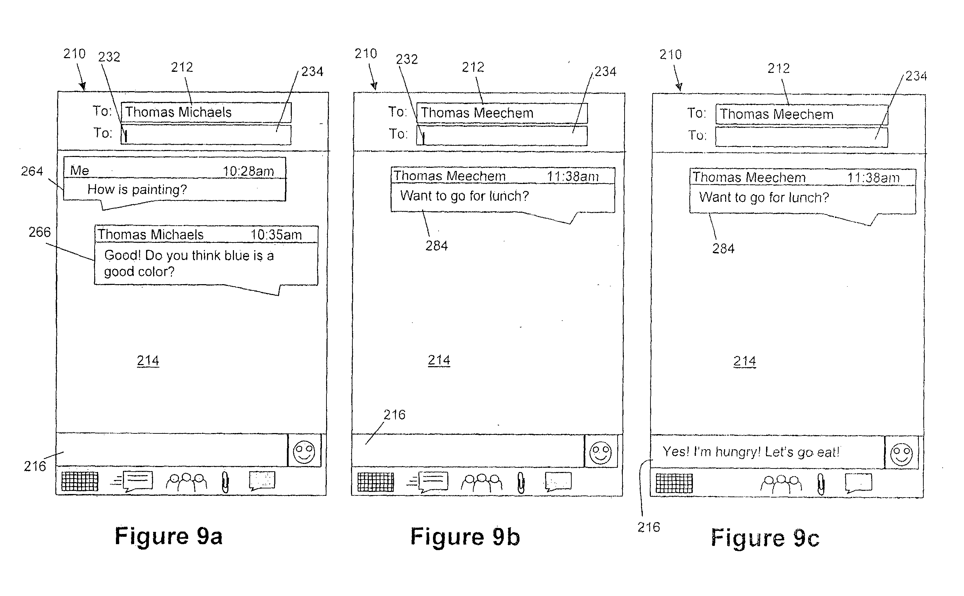

Further example mobile device GUIs show the flexibility of the order in which information is added in Figures 9a, 9b and 9c. In one example, a user specifies a recipient, changes or modifies the recipient, and then composes message content. The GUIs of Figures 9a, 9b and 9c allow recipient information and message content to be added in various sequences, and to be modified in any order.

Referring first to Figure 9a, mobile device 10 detects the input of the recipient "Thomas Michaels" into recipient field 212. Upon detecting the input of the recipient,. a message history relating to the input recipient (comprising messages 264 and 266) is retrieved and displayed in message history display area 214. Based on the retrieved and displayed message history for example, the user may realize that "Thomas Michaels" is not the correct recipient and that they intended to select or input another recipient.

Referring to Figure 9b, mobile device 10 detects input to change the recipient in recipient field 212 to "Thomas Meechem". Upon detecting the input to change the recipient, a new message history (comprising message 284) is retrieved and displayed in message history display area 214. In this example, "Thomas Meechem" is the desired recipient, which the user can confirm based on the message history (comprising message 284).

Once the desired recipient is input, with reference to Figure 9c, an appropriate message may be composed in message composition field 216.

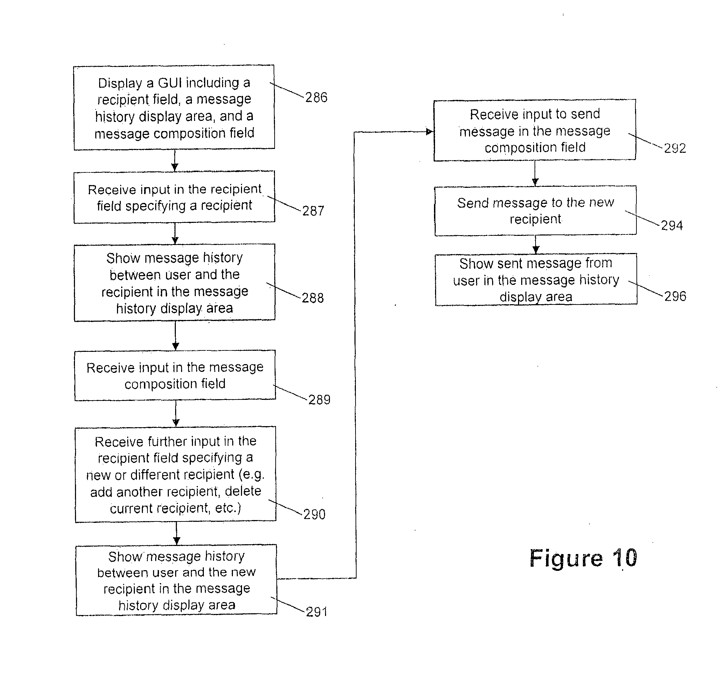

Turning to Figure 10, example computer executable instructions are provided, with reference to corresponding elements of Figures 9a, 9b and 9c. At block 286, mobile device 10 displays GUI 210 including recipient field 212, message history display area 214, and message composition field 216. At block 287, an input is received into recipient field 212 specifying the recipient of a message being composed. At block 288, the message history of messages communicated between mobile device 10 and the recipient is retrieved from message history storage and displayed in message history display area 214. At block 289, an input is received into message composition field 216. At block 290, a further input is received in the recipient field 212 specifying a new or different recipient. For example, the new recipient can replace the current recipient. In another example, a new recipient is added or deleted to a list of recipients. At block 291, the message history associated with the new recipient, e.g., between the user and the new recipient or recipients, is retrieved and then shown in message history display area 214. At block 292, mobile device 10 receives an input to send the message, which causes the message to be sent at block 294. At block 296 the sent message is shown in a new or updated message history display area 214.

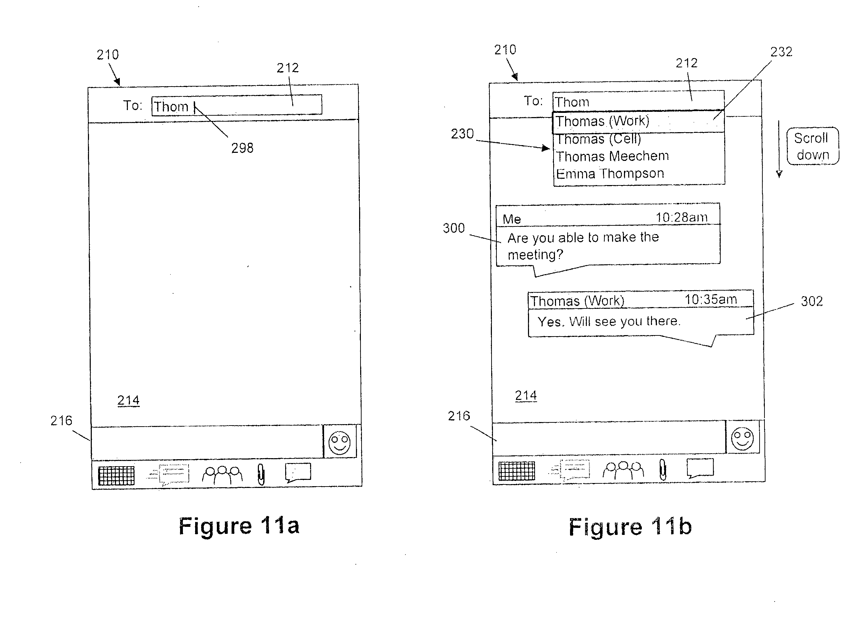

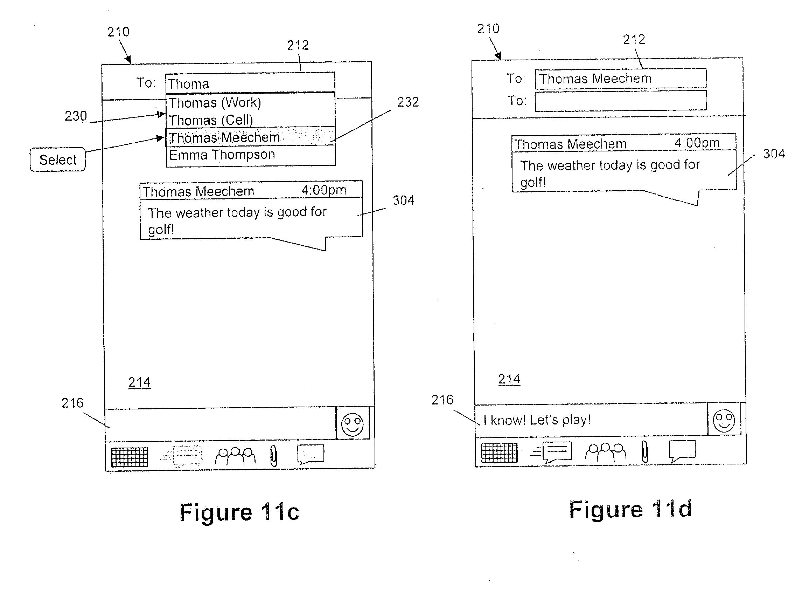

Turning to Figures 11a, 11b, 11c and 11d, example GUIs demonstrate the ability to dynamically display message histories. In one example, while scrolling through a list of candidate recipients, without having actually specified a recipient, a message history for the currently highlighted recipient is shown.

Referring first to Figure 11a, mobile device 10 detects input of the text "Thom" into recipient field 212. Cursor 298 is shown in recipient field 212. Mobile device 10 detects that there are candidate recipients having recipient names containing the letters "Thom", and displays a dropdown list of such recipients, as is well known in the art.

Referring to Figure 11b, dropdown list 230 includes four candidate recipients, namely Thomas (Work); Thomas (Cell); Thomas Meechem; and Emma Thompson. Cursor 232, illustrated as a highlighted bar, can be used to scroll up or down the list 230 as is well known, using, for example, an input mechanism of mobile device 210. When mobile device 10 detects that cursor 232 is positioned over a recipient of dropdown list 230, such as "Thomas (Work)", then the message history (comprising messages 300 and 302) between the user of mobile device 10 and "Thomas (Work)" is shown in message history display area 214. The message history helps determine if the highlighted recipient is the desired recipient. In one example, if the highlighted recipient is not the desired recipient, the user can provide input to mobile device 10 to scroll through, or otherwise select another recipient of dropdown list 230. Highlighting a recipient is not the same as selected a recipient. For example, to select a recipient, the recipient name is first highlighted, and then, if a selection input is received with respect to the highlighted name, then the highlighted recipient is selected. Furthermore, for example, highlighting a recipient in dropdown list 230 does not cause dropdown list 230 to cease being displayed, dropdown list 230 continues to be displayed until input is received to select a highlighted recipient or until an input is received indicating a cancellation of the recipient selection process. In the example shown in Figure 11 b, "Thomas (Work)" is not the desired recipient.

Referring to Figure 11c, mobile device 10 detects input to scroll or otherwise move cursor 232 to "Thomas Meechem" in dropdown list 230. Upon highlighting "Thomas Meechem" message history 304 between the user of mobile device 10 and "Thomas Meechem" is displayed. Based on the message history 304, the user, in this example, determines that "Thomas Meechm" is the desired recipient and, thus, selects "Thomas Meechem" from dropdown list 230 by, for example, actuating an input mechanism of mobile device 10.

Referring to Figure 11d, the selected recipient "Thomas Meechem" is shown in recipient field 212 and message history 304 is shown in the message history display area 214. The user of mobile device 10is able to begin drafting a message in message composition field 216, knowing the context of the message and being assured that the recipient is correct.

Mobile device 10 is configured to receive text input into recipient field 212. Upon receiving text input, a list of candidate recipients corresponding to the text input into the recipient field is displayed in a list, such as, for example, dropdown list 230, a popup list or the like. The list, for example, comprises the desired recipient and other recipients having some correspondence to the input text. Upon detecting an initial interest in one of the candidate recipients, such as, for example, through the detection that cursor 232 has been positioned over a recipient in the list or by detecting a single click or touch of a recipient in the list, or some other similar input mechanism, mobile device 10 displays the message history between the user of mobile device 10 and the recipient of interest in message history display area 214. Mobile device 10 is further configured to receive a conclusive selection input, such as, for example, through the detection of an actuation input while an entry in the list is highlighted or by detecting a double click or touch of a recipient in the list, or some other similar input mechanism, which selects one of the recipients from the list for inclusion as a recipient in recipient field 212. In another example, before receiving the conclusive selection input selecting the desired recipient, mobile device 10 detects a second initial interest in another one of the candidate recipients and displays a second message history between the user and the another one of the candidate recipients in message history display area 214.

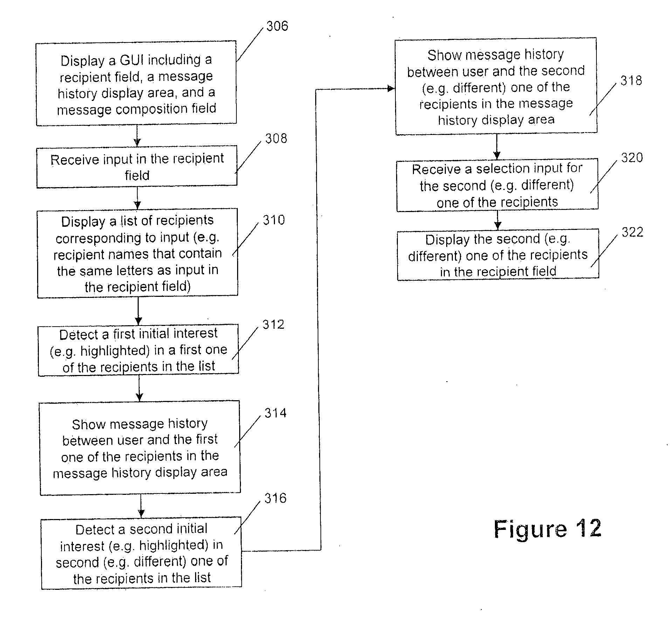

Figure 12 provides example computer executable instructions for dynamically showing message history with reference to elements corresponding to Figures 11 a, 11 b, 11c, and 11d. At block 306, mobile device 10 displays a GUI including recipient field 212, message history display area 214, and message composition field 216. At block 308, an input is received into recipient field 212, the input signifying at least a portion of information related to a desired recipient. At block 310 a list of recipients, each of whom has some correspondence to the input is displayed. For example, the list of recipients is populated with potential recipients from, for example, contacts 34 of Figure 6, that have names that include the same letters as the input. In another example, the list of recipients is populated with recipients from contacts 34 (of Figure 6) that have any information (e.g., company, phone number, address) that corresponds to the input. At block 312 mobile device 10 detects a first initial interest in a first one of the recipient in the list through, for example, detection of input to highlight the recipient. At block 314, the message history between the user of mobile device 10 and the first recipient of interest is shown in message history display area 214. At block 316, mobile device 10 then detects a second initial interest in a second one of the recipients in the list. At block 318, mobile device 10 shows the message history between the user and the second recipient of interest. At block 320, a selection input is received in association with the second recipient of interest, thereby selecting the second one of the recipients as an actual recipient for the message that is being composed. At block 322, the second one of the recipients is displayed in recipient field 212.

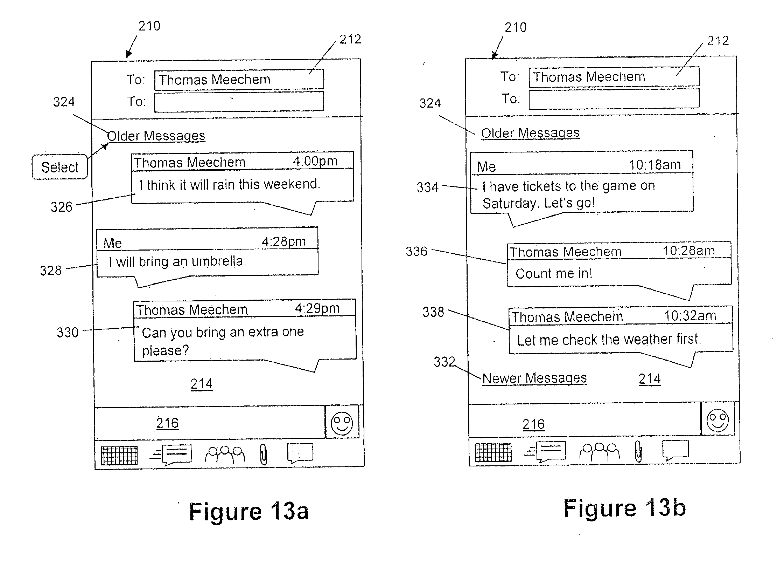

Turning to Figures 13a and 13b, example GUIs are shown that demonstrate the display of different portions of message histories through the selection of a button or a link.

Referring to Figure 13a, a recipient "Thomas Meechem" has been selected in recipient field 212, and a portion of the message history (comprising messages 326, 328 and 330) is shown in the message history display area 214. There is also a link 324, which, when selected, causes older messages from a conversation to be displayed in message history display area 214. Link 324 allows navigation between older and newer messages in the message history.

In one example, link 324 reduces the number of messages to scroll over when navigating between recipient field 212 and message composition field 216. For example if input is currently being entered into message composition field 216, and a switch is desired to input text into recipient field 212, in some examples it is necessary to scroll through all of the messages displayed in message history display area 214. In some examples, the messages in message history display area 214 are displayed in a continuous fashion and if there are many messages in the message history, it may be necessary to scroll through all of the messages, up to the earliest message, before being able to navigate to recipient field 212. In the example shown in Figures 13a and 13b, navigating between text composition field 216 and recipient field 212 does not require scrolling through many messages since only the most recent messages (330, 328, 326) are included in message history display area 214 instead of the entire message history. Segmenting message history through the use of a mechanism such as link 324 alleviates some inconveniences associated with having to scroll through an entire message history, thereby potentially saving time and reducing the number of scrolling actions by the user in conversations having many messages.

Upon detecting a selection of link 324 of Figure 13a, mobile device 10 displays GUI 210 of Figure 13b. In Figure 13b, older messages 334, 336, and 338 are displayed in message history display area 214. Link 324 of Figure 13b can be actuated to navigate to a set of even older messages. Link 332 can be actuated to navigate to a set of newer messages, for example back to messages 326, 328 and 330 of Figure 13a. Embodiments comprising links 324 and 332 permit mobile device 10 to display different (e.g. newer or older) portions of a conversation's message history within message history display area 214.

The message history shown in message history display area 214 is a portion of a complete message history between the user of mobile device 10 and the recipient. The message history shown in the message history display area 214 may be selected to be the most recent portion of the complete message history, and the link 324, when selected, navigates to an older portion of the complete message history.

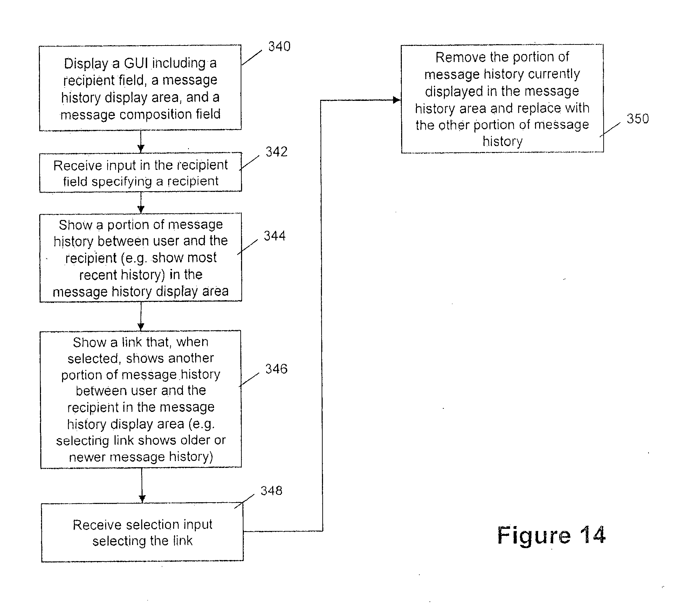

Turning to Figure 14, example computer executable instructions are provided for displaying different portions of a message history with reference to corresponding elements of Figures 13a and 13b. At block 340, mobile device 10 displays a GUI including recipient field 212, message history display area 214, and message composition field 216. At block 342, mobile device 10 receives an input into recipient field 212 specifying text for a recipient of the message being composed. At block 344, mobile device 10 shows a portion of the message history between a user of mobile device 10 and the recipient in message history display area 214. In one example, the most recent messages in the message history are shown. At block 346, link 324 is shown in association with the shown portion of the message history. Link 324, when selected, causes another portion of the message history to be shown in message history display area 214, such as, for example, a newer or older portion of the message history. At block 348, mobile device 10 receives a selection input selecting link 324. At block 350, mobile device 10 replaces the portion of the message history currently displayed in the message history display area 214 with the other portion of message history (e.g. the newer or older portion of the message history).

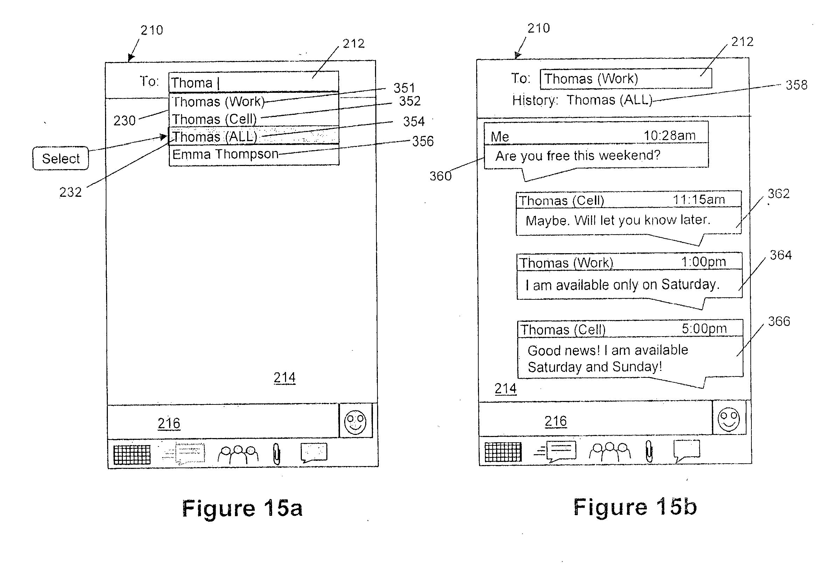

Turning to Figures 15a and 15b, example GUIs are shown that demonstrate displaying message histories in a combined fashion for a single recipient that has multiple methods of communication. Some recipients, for example, may have multiple recipient contact addresses, such as a home phone number, a work phone number, a home email address, a work instant messaging address and the like.

Referring first to Figure 15a, the text "Thoma" has been input into recipient field 212. Accordingly, dropdown list 230 is shown, including names of possible recipients which have a correspondence to the input text "Thoma", namely Thomas (Work) 351; Thomas (Cell) 352; Thomas (ALL) 354; and Emma Thompson 356. In this example, the contact Thomas may have multiple phone numbers, such as a work phone number and a cell phone number, or communication methods, such as work information for email and cell phone information for text messaging, which are denoted by the recipient names "Thomas (Work)" 350 and "Thomas (Cell)" 352. A message can be exchanged with either of these recipient names 351, 352 in order to communicate with the contact Thomas. The contact "Thomas" may also interchangeably send messages to the user from his work number and cell number. In some examples, viewing the messages from Thomas' work number or cell number in isolation may break the flow of the conversation and may lead to incomplete messages and it may therefore be desirable to view the message history from both the recipient names 351 and 352 together, to better understand the context.

In the example GUI 210 of Figure 15a, recipient entry "Thomas (ALL)" 354 is included. Upon detecting aa selection of recipient entry 354 the combined message history from messages exchanged between the user and "Thomas (Work)" 350, and from messages exchanged between the user and "Thomas (Cell)" 352 is shown.

Upon selecting the recipient name "Thomas (ALL)" 354, referring to Figure 15b, the message history (360, 362, 364, 366) from both "Thomas (Work)" 350 and "Thomas (Cell)" 352 is shown. A notification or status message 358 shows that the message history is from all the recipient names (or phone numbers) associated with the contact "Thomas". Recipient field 212 shows that messages will be sent to Thomas' work phone number, although this can be changed, for example, to Thomas' cell phone number.

Messages displayed in message history display area 214 of Figure 15b, for example, are organized by chronological order. In Figure 15b, a message 360 from the user is sent at 10:28 am. Then a message 362 from "Thomas (Cell)" (e.g. Thomas' cell phone) is received at 11:15 am. Then a message 364 from "Thomas (Work)" (e.g. Thomas' work phone) is received at 1:00 pm. This is followed by a message 366 received from "Thomas (Cell)" at 5:00 pm.

As seen from Figures 15a and 15b, example GUIs 210 enable the viewing of messages from a contact having multiple contact addresses (e.g. phone number, email address, instant messaging identification, etc.), in a unified manner. In this way, the user is able to continue a conversation with the same contact, even though the contact is using different devices, messaging protocols, messaging applications, or contact addresses at different times.

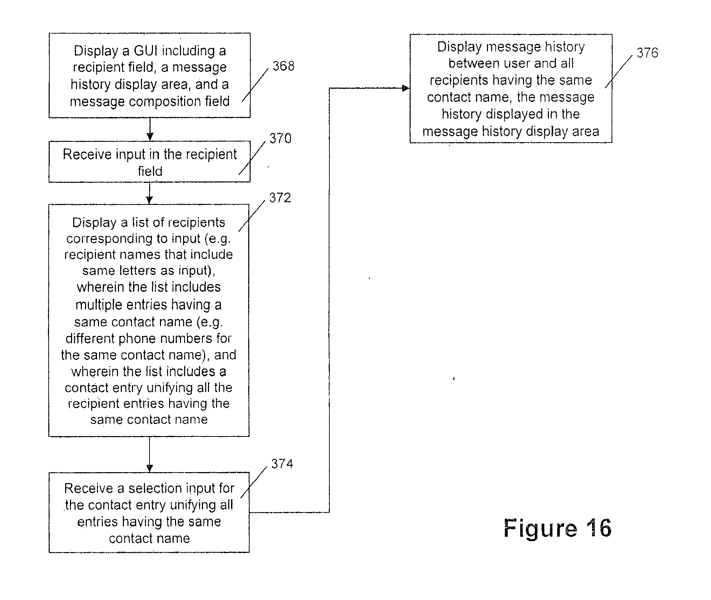

Figure 16 provides example computer executable instructions for combining the message histories for a single recipient having multiple contact pathways, with reference to corresponding elements of Figures 15a and 15b. At block 368, mobile device 10 displays GUI 210 including recipient field 212, message history display area 214, and message composition field 216. At block 370, mobile device 10 receives an input of text input into recipient field 212. Upon detection of the text input, mobile device 10 displays a list of recipients corresponding to the input at block 372. For example, the recipients names listed may include the same letters as the input. The list includes multiple entries for a single contact that has multiple methods of communication. For example, there may be multiple phone number entries for the same contact name. The list also includes a contact entry unifying multiple recipient entries for the single contact having multiple communication methods. At block 374, mobile device 10 receives a selection input for the contact entry unifying the multiple recipient entries for the single contact having multiple communication methods. At block 376, mobile device 10 displays the message history between the user of mobile device 10 and the selected single recipient, unified across each different communication method for the single contact. The combined message history is displayed in message history display area 214.

A specified recipient may unify multiple recipient contact addresses, and the message history displayed in such an example may include a combination of messages exchanged between the user and any one of the multiple recipient contact addresses. For example, each of the recipient contact addresses may have identical names associated with the contact entry.

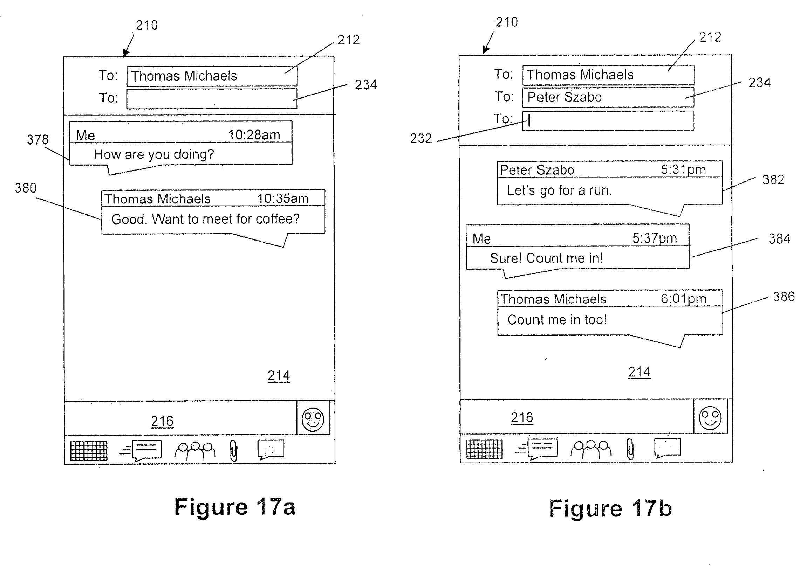

Turning to Figures 17a and 17b, example GUI 210s are shown displaying different message histories when switching between a recipient to a group of recipients. Referring to Figure 17a, the user and a recipient "Thomas Michaels" may be in a messaging conversation in which they are the only participants. The messages 378 and 380 have previously been exchanged, as shown in message history display area 214.

As shown in to Figure 17b, a second recipient, "Peter Szabo" is added in second recipient field 234. Upon detecting the addition of the second recipient, mobile device 10 updates the message history shown in message history display are 214 to reflect the messaging history of the group of recipients comprising the user of mobile device 10, Thomas Michaels and Peter Szabo. In the present example, the three participants (e.g. the user, Thomas Michaels, and Peter Szabo) were exchanging messages (382, 384, 386) amongst each other. Showing different message histories for different sets of recipients provides context for conversations. The example GUIs 210 of Figures 17a and 17b demonstrate functionality whereby a user of mobile device 10 is provided an accurate conversational context depending on the currently specified recipients of a message.

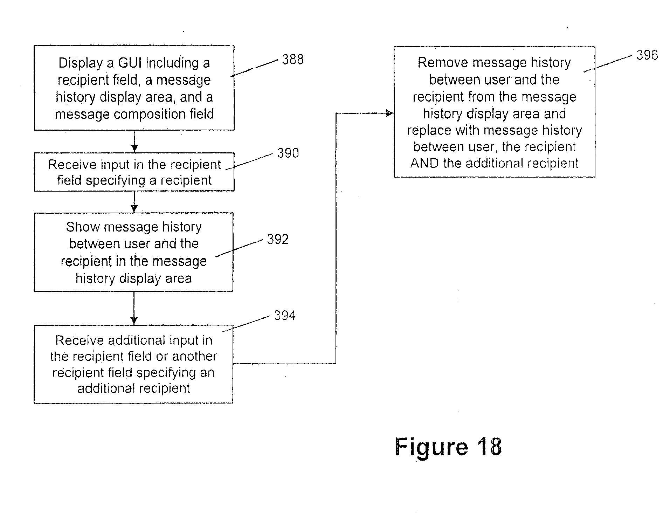

Turning to Figure 18, example computer executable instructions are provided for displaying different message histories based on the different set of recipients with reference to corresponding elements of Figures 17a and 17b. At block 388, mobile device 10 displays a GUI including recipient field 212, message history display area 214, and message composition field 216. At block 390 mobile device 10 receives an input of text into the recipient field 212 specifying a recipient. At block 392 the message history between the user of mobile device 10 and the recipient is retrieved from message histories 35 (of Figure 1) and shown in message history display area 214. At block 394, an additional input of text into the second recipient field 234 is received, which specifies an additional recipient. At block 396, the message history between the user and the recipient displayed in message history display area 214 is switched to the message history between the user, the recipient and the additional recipient.

The steps or operations in the flow charts described herein are just for example. There may be many variations to these steps or operations without departing from the invention. For instance, the steps may be performed in a differing order, or steps may be added, deleted, or modified.

It can also be appreciated that the displays or screens described herein are just for example. There may be many variations to the configuration and arrangement of information and user interface controls without departing from the scope of the invention. For instance, the information and the user interface controls may be in a differing order, or may be added, deleted, or modified.

Although the above has been described with reference to certain specific examples, various modifications thereof will be apparent to those skilled in the art without departing from the scope of the claims appended hereto.

## Claims

1. A method of operating a mobile device (10) comprising:
displaying a message composition application (306) comprising a first recipient field (212), a message history display area (214), and a message composition field (216);
receiving text in the first recipient field (308); the method being **characterised by** the following steps
displaying a list of candidate recipients corresponding to the text in the first recipient field (310);
detecting that a cursor has been positioned over a given candidate recipient in the list (312); and
displaying a message history associated with the given candidate recipient in the message history display area (314).

2. The method of claim 1 further comprising: receiving a selection input specifying the given candidate recipient as a recipient, and
upon detecting that the recipient has been specified:
displaying a second recipient field;
navigating application focus from the first recipient field to the second recipient field; and
continuing to displaying the message history associated with the recipient.

3. The method of claim 2 further comprising, when detecting application focus has moved from the second recipient field to the message composition field, continuing to display the first recipient field and the second recipient field.

4. The method of claim 2 further comprising receiving text input in the message composition field before receiving the input in the first recipient field for specifying the recipient.

5. The method of claim 1 further comprising:
detecting that the cursor has been positioned over an other given candidate recipient in the list; and
displaying an other message history associated with the other given candidate recipient in the message history display area.

6. The method of claim any one of claims 1 to 5 wherein the message history shown in the message history display area is a portion of a complete message history associated with the recipient, and a link is provided in the message composition application to navigate between different portions of the complete message history.

7. The method of claim 6 wherein the message history shown in the message history display area is the most recent portion of the complete message history, and the link, when selected, navigates to an older portion of the complete message history.

8. The method of claim 2 wherein the recipient that has been specified is a contact entry unifying multiple recipient contact addresses, and the message history displayed comprises a combination of messages exchanged with any one of the multiple recipient contact addresses.

9. The method of claim 8 wherein each of the recipient contact addresses have identical names associated with the contact entry.

10. The method of claim 1 wherein the message is a text message, which is exchanged using a short messaging service protocol or a multimedia messaging service protocol.

11. The method of claim 2 further comprising receiving an additional input specifying an additional recipient, and replacing the message history associated with the recipient with a message history associated with the additional recipient.

12. A computer program comprising computer executable instructions for displaying message history while composing a message, the computer executable instructions being adapted to perform all the steps of any one of claims 1 to 11 when said program is run on a computer and being embodied on a computer readable medium (108).

13. A mobile device (10) comprising a processor (102), a display (110), and memory (108), the memory (108) comprising computer executable instructions for displaying message history on the display while composing a message, the computer executable instructions being adapted to perform all the steps of any one of claims 1 to 11.

## Patentansprüche

1. Verfahren zum Betreiben einer mobilen Vorrichtung (10), das aufweist:
Anzeigen einer Nachrichterstellungsanwendung (306), die ein erstes Empfängerfeld (212), einen Nachricht-Historie-Anzeigebereich (214) und ein Nachrichterstellungsfeld (216) aufweist;
Empfangen von Text in dem ersten Empfängerfeld (308);
wobei das Verfahren **gekennzeichnet ist durch** die folgenden Schritte:
Anzeigen einer Liste von Kandidat-Empfängern entsprechend dem Text in dem ersten Empfängerfeld (310);
Erfassen, dass ein Cursor über einen gegebenen Kandidat-Empfänger in der Liste positioniert wurde (312); und
Anzeigen einer Nachricht-Historie, die mit dem gegebenen Kandidat-Empfänger assoziiert ist, in dem Nachricht-Historie-Anzeigebereich (314).

2. Das Verfahren gemäß Anspruch 1, das weiter aufweist: Empfangen einer Auswahleingabe, die den gegebenen Kandidat-Empfänger als einen Empfänger spezifiziert, und
bei einem Erfassen, dass der Empfänger spezifiziert wurde:
Anzeigen eines zweiten Empfängerfelds;
Navigieren eines Anwendungs-Fokus von dem ersten Empfängerfeld zu dem zweiten Empfängerfeld; und
Fortfahren mit einer Anzeige der Nachricht-Historie, die mit dem Empfänger assoziiert ist.

3. Das Verfahren gemäß Anspruch 2, das weiter aufweist, bei einem Erfassen, dass sich der Anwendungs-Fokus von dem zweiten Empfängerfeld zu dem Nachrichterstellungsfeld verschoben hat, Fortfahren mit einer Anzeige des ersten Empfängerfelds und des zweiten Empfängerfelds.

4. Das Verfahren gemäß Anspruch 2, das weiter aufweist ein Empfangen einer Texteingabe in dem Nachrichterstellungsfeld vor einem Empfangen der Eingabe in dem ersten Empfängerfeld zum Spezifizieren des Empfängers.

5. Das Verfahren gemäß Anspruch 1, das weiter aufweist:
Erfassen, dass der Cursor über einen anderen gegebenen Kandidat-Empfänger in der Liste positioniert wurde; und
Anzeigen einer anderen Nachricht-Historie, die mit dem anderen gegebenen Kandidat-Empfänger assoziiert ist, in dem Nachricht-Historie-Anzeigebereich.

6. Das Verfahren gemäß einem der Ansprüche 1 bis 5, wobei die Nachricht-Historie, die in dem Nachricht-Historie-Anzeigebereich gezeigt wird, ein Teil einer vollständigen Nachricht-Historie ist, die mit dem Empfänger assoziiert ist, und wobei ein Link bzw. eine Verbindung in der Nachrichterstellungsanwendung vorgesehen ist zum Navigieren zwischen verschiedenen Teilen der vollständigen Nachricht-Historie.

7. Das Verfahren gemäß Anspruch 6, wobei die Nachricht-Historie, die in dem Nachricht-Historie-Anzeigebereich gezeigt wird, der neueste Teil der vollständigen Nachricht-Historie ist und der Link bei Auswahl zu einem älteren Teil der vollständigen Nachricht-Historie navigiert.

8. Das Verfahren gemäß Anspruch 2, wobei der Empfänger, der spezifiziert wurde, ein Kontakteintrag ist, der mehrere Empfängerkontaktadressen vereinigt, und die angezeigte Nachricht-Historie eine Kombination von Nachrichten aufweist, die mit den mehreren Empfängerkontaktadressen ausgetauscht wurden.

9. Das Verfahren gemäß Anspruch 8, wobei jede der
Empfängerkontaktadressen identische Namen mit dem Kontakteintrag assoziiert hat.

10. Das Verfahren gemäß Anspruch 1, wobei die Nachricht eine Textnachricht ist, die unter Verwendung eines Kurznachrichtendienst-Protokolls oder eines Multimedia-Messaging-Dienst-Protokolls ausgetauscht wird.

11. Das Verfahren gemäß Anspruch 2, das weiter aufweist ein Empfangen einer zusätzlichen Eingabe, die einen zusätzlichen Empfänger spezifiziert, und Ersetzen der Nachricht-Historie, die mit dem Empfänger assoziiert ist, mit einer Nachricht-Historie, die mit dem zusätzlichen Empfänger assoziiert ist.

12. Ein Computerprogramm, das computerausführbare Anweisungen aufweist zum Anzeigen einer Nachricht-Historie während eines Erstellens einer Nachricht, wobei die computerausführbaren Anweisungen ausgebildet sind zum Durchführen aller Schritte gemäß einem der Ansprüche 1 bis 11, wenn das Programm auf einem Computer abläuft und auf einem computerlesbaren Medium (108) aufgenommen ist.

13. Eine mobile Vorrichtung (10), die einen Prozessor (102), eine Anzeige (110) und einen Speicher (108) aufweist, wobei der Speicher (108) computerausführbare Anweisungen aufweist zum Anzeigen einer Nachricht-Historie auf der Anzeige während eines Erstellens einer Nachricht, wobei die computerausführbaren Anweisungen ausgebildet sind zum Durchführen aller Schritte gemäß einem der Ansprüche 1 bis 11.

## Revendications

1. Procédé de mise en oeuvre d'un dispositif mobile (10) comprenant :
l'affichage (306) d'une application de composition de message comprenant un premier champ (212) de destinataire, une zone (214) d'affichage d'historique de messages et un champ (216) de composition de message ;
la réception (308) de texte dans le premier champ de destinataire,
le procédé étant **caractérisé par** les étapes suivantes :
l'affichage (310) d'une liste de destinataires candidats correspondant au texte dans le premier champ de destinataire ;
la détection (312) qu'un curseur a été placé sur un destinataire candidat donné de la liste ; et
l'affichage, dans la zone d'affichage d'historique de messages, d'un historique de messages (314), associé au destinataire candidat donné.

2. Procédé selon la revendication 1, comprenant en outre la réception d'une entrée de choix spécifiant, comme destinataire, le destinataire candidat donné, et
à la détection que le destinataire a été spécifié :
l'affichage d'un second champ de destinataire ;
le déplacement du point d'activité de l'application du premier champ de destinataire au second champ de destinataire ; et
la poursuite de l'affichage de l'historique de messages associé au destinataire.

3. Procédé selon la revendication 2, comprenant en outre, lors de la détection que le point d'activité de l'application s'est déplacé du second champ de destinataire au champ de composition de message, la poursuite de l'affichage du premier champ de destinataire et du second champ de destinataire.

4. Procédé selon la revendication 2, comprenant en outre la réception d'entrée de texte du champ de composition de message avant la réception de l'entrée du premier champ de destinataire pour spécifier le destinataire.

5. Procédé selon la revendication 1, comprenant en outre :
la détection que le curseur a été placé sur un autre destinataire candidat donné de la liste ; et
l'affichage, dans la zone d'affichage d'historique de messages, d'un autre historique de messages associé à l'autre destinataire candidat donné.

6. Procédé selon l'une quelconque des revendications 1 à 5, dans lequel l'historique de messages montré dans la zone d'affichage d'historique de messages est une partie d'un historique complet de messages associé au destinataire, et dans lequel un lien est prévu dans l'application de composition de message pour naviguer entre les différentes parties de l'historique complet de messages.

7. Procédé selon la revendication 6, dans lequel l'historique de messages montré dans la zone d'affichage d'historique de messages est la partie la plus récente de l'historique complet de messages, et le lien, lorsqu'il est choisi, navigue dans une partie plus ancienne de l'historique complet de messages.

8. Procédé selon la revendication 2, dans lequel le destinataire qui a été spécifié est une entrée de contact unifiant de multiples adresses de contact de destinataire, et dans lequel l'historique de messages affiché comprend une combinaison de messages échangés avec l'une quelconque des multiples adresses de contact de destinataire.

9. Procédé selon la revendication 8, dans lequel toutes les adresses de contact de destinataire ont des noms identiques associés à l'entrée de contacts.

10. Procédé selon la revendication 1, dans lequel le message est un message de texte, qui est échangé en utilisant un protocole de service de messages courts ou un protocole de service de messages multimédia.

11. Procédé selon la revendication 2, comprenant en outre la réception d'une entrée additionnelle spécifiant un destinataire additionnel, et remplaçant l'historique de messages associé au destinataire par un historique de messages associé au destinataire additionnel.

12. Programme informatique comprenant des instructions exécutables par processeur pour afficher un historique de messages tout en composant un message, les instructions exécutables par processeur étant aptes à effectuer toutes les étapes de l'une quelconque des revendications 1 à 11, lorsque ledit programme est exécuté sur un processeur et étant incorporé sur un support (108) lisible par processeur.

13. Dispositif mobile (10) comprenant un processeur (102), un écran (110) et une mémoire (108), la mémoire (108) comprenant des instructions exécutables par processeur pour afficher un historique de messages sur l'écran tout en composant un message, les instructions exécutables par processeur étant aptes à effectuer toutes les étapes de l'une quelconque des revendications 1 à 11.
